Europäisches Patentamt

European Patent Office

Office européen des brevets

(19)

(11) **EP 0 404 375 B1**

(12) **EUROPEAN PATENT SPECIFICATION**

(45) Date of publication and mention
of the grant of the patent:
**08.10.1997  Bulletin 1997/41**

(51) Int Cl.6: **D06F 37/30**

(21) Application number: **90306016.8**

(22) Date of filing: **01.06.1990**

(54) **PSC motor for automatic washer**

Motor mit einem ständig angeschlossenen Phasenverschiebungskondensator für eine Waschmaschine

Moteur à condensateur de déphasage à branchement permanent pour machine à laver

(84) Designated Contracting States:
**AT BE CH DE DK ES FR GB GR IT LI LU NL SE**

(30) Priority: **20.06.1989  US 368653**

(43) Date of publication of application:
**27.12.1990  Bulletin 1990/52**

(73) Proprietor: **WHIRLPOOL CORPORATION
Benton Harbor Michigan 49022 (US)**

(72) Inventors:
• **Nystuen, Arne M.
Stevensville, MI 49127 (US)**

• **Getz, Edward H.
Eau Claire, MI 48111 (US)**
• **Burk, Jeffrey L.
Stevensville, MI 49127 (US)**

(74) Representative: **Senior, Alan Murray et al
J.A. KEMP & CO.,
14 South Square,
Gray's Inn
London WC1R 5LX (GB)**

(56) References cited:
**US-A- 4 779 431**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

The present invention relates to an agitator drive system for use in an automatic washer including an alternately reversing drive motor, especially a permanent split capacitor.

In U.S. Patent No. 4,779,431, a drive system for an automatic washer is disclosed that has a high slip motor connected to a drive reduction mechanism for driving an energy absorbing agitator. The high slip motor is driven with spaced alternating pulses so that the agitator accelerates in one direction and then slows after the end of the pulse followed by an acceleration and then slowing in a second direction so that sinusoidal agitation is produced by a pulse input to the motor. It was found that sinusoidal motion in a washing machine produced improved washing characteristics, with reduced fabric damage. Such agitation motion was previously available only by using relatively large, complex and expensive reversing transmissions.

In U.S. Patent No. 4,542,633, an agitating drive washing machine is disclosed having an agitating wheel connected to a reversible drive motor by means of a pulley arrangement. The agitating wheel is shown as having short, thick blades. A rotational angle detector is connected to a control that causes the motor, which is described as having rigidity, to rotate the agitating wheel about a predetermined angle. Upon reaching the predetermined angle, the motor is not energized until the agitator wheel has stopped, at which time the motor is operated in a reverse direction to again rotate the agitator wheel about the predetermined angle.

An automatic washer manufactured by an assignee of U.S. Patent No. 4,542,633, and appearing to incorporate the teachings of that patent, has been observed to have an agitator stroke angle of approximately 360° for each stroke at a rate of 70 strokes per minute. A high rigidity motor causes a nearly constant agitator speed in each rotational direction following a brief, rapid acceleration, and followed by the coasting to stop action.

Thus, automatic washer drive systems having reversing motors for producing a generally square wave agitation curve are known. An agitation curve is defined herein as the rotational speed of the agitator over time. A square wave agitation curve is thus a constant speed in one direction followed by a constant speed in the opposite rotational direction. Correspondingly, a sinusoidal agitation curve would result from a gradual acceleration followed immediately by a gradual deceleration of the agitator in each rotational direction.

In U.S. Patent No. 3,315,500 to Brundage et al., a mechanism is provided as a drive system for an agitator using a motor operating at a constant speed in one direction to drive a hydraulic transmission which provides very rapid reversal of the agitator through a reversing valve and, thus, is a square wave type agitation motor. An elastic coupling is used between the agitator and the agitator drive shaft to reduce the shock which would otherwise be delivered to the agitator at each reversal.

An automatic washer having an axial air gap induction motor is disclosed in U.S. Patent No. 4,232,536. The motor is repeatedly reversed to oscillate a vertical axis agitator through a planetary drive coupled therebetween, the motor being operated at high speeds. The desirability of providing a soft starting action of the agitator each time it reverses is recognized, the soft starting action being provided by the backlash associated with the planetary drive mechanism.

The appliances disclosed in the above-cited references demonstrate the importance of the type of motor used. The motors employed greatly influence the quality of operation of these appliances.

A properly designed permanent split capacitor (PSC) motor has many characteristics which make it ideal for a continuously reversing application, such as in an automatic washer. It does not require a starting switch, full load efficiency is 70%, the ratio of starting to breakdown torque is about 0.6, electronics could be added to extend performance capability, and it is inherently shorter in axial length than other motor types. Its reliability and many years of existence makes this a very low risk motor for this application.

Permanent split capacitor motors and the design thereof are well known in the prior art. Typically, the run and auxiliary windings are wound in space pole quadrature, i.e., 90 electrical degrees with respect to each other the former is usually wound first, and then the latter is wound on top of it with a different number of turns and wire size. The rotor is of the usual squirrel cage construction.

The design parameters of prior art permanent split capacitor motors is well established and any significant deviation from these parameters is considered to result in motors which function poorly. For example, the ratio of the stator bore, $D_1$, to the outside dimension of the stator (D) is approximately 0.6, for a four pole motor. The well-known empirical formula for establishing a value for this ratio, where P is the number of poles, is:

$$D_1 = \frac{D - 0.647}{1.175 + \dfrac{1.03}{P}}$$

Also, for maximum efficiency at the load point, the motor should have a turns ratio in the range 1.5 to 2.5.

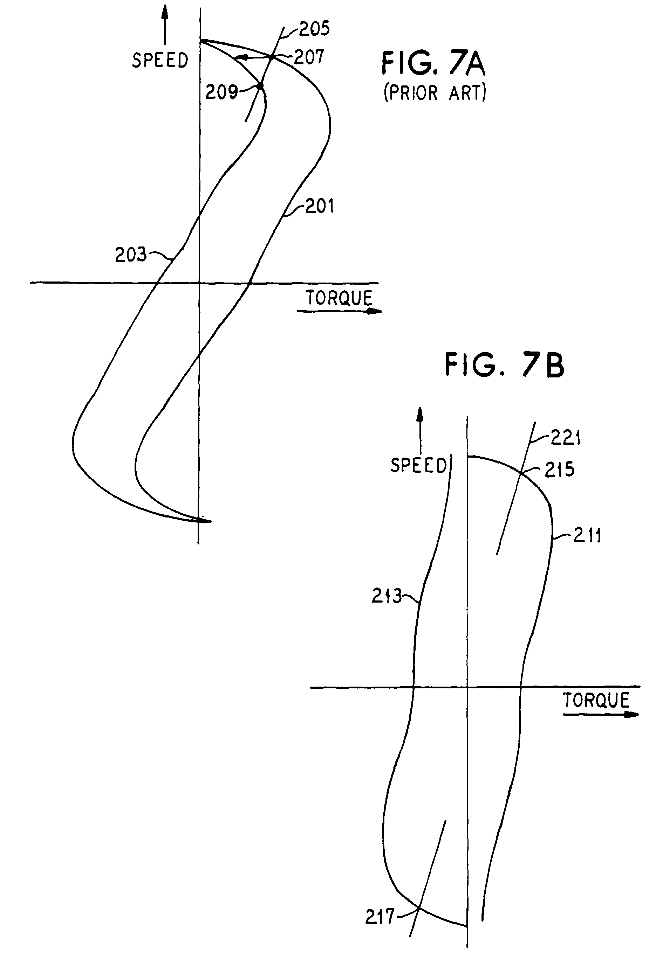

FIG. 7A shows the speed-torque curves for a prior art reversing motor in which curve 201 is for one direction of rotation and curve 203 is for an opposite direction of rotation. The load line 205 intersects both curves 201 and 203 as shown. If the motor winding is reversed at point 207, the system will follow curve 205 to point 209 where it will stabilize instead of reversing. The present invention overcomes this drawback in the prior art. Instead, the curves 201 and 203 are a function of the turns ratio of the windings.

An excellent summary of the design and operational parameters of prior art permanent split capacitor motors is found in "Theory and Design of Small Induction Motors" by Cyril G. Veinott, published by McGraw Hill Book Company, Inc. in 1959.

In a continuously reversing application of the permanent split capacitor motor, it is necessary to greatly increase the size of the motor to achieve rapid acceleration under load. However, it has been found that large increases in physical motor size produce only small increases in motor performance. This is because most of the increase in torque is used to turn the rotor which has increased inertia. Again, the present invention overcomes this drawback in the prior art.

According to the present invention there is provided a reversing drive apparatus comprising:

a permanent split capacitor motor, having a predetermined number of poles P and at least run and auxiliary windings which are located approximately 360°/2P mechanical degrees apart, said motor having a capacitor connected in series with the auxiliary winding in a first mode and the run winding in a second mode, to provide an electrical phase shift of 360°/P between the windings, whereby the motor produces motor torque according to a first angular velocity/torque characteristic in said first mode and a second angular velocity/torque characteristic in said second mode; and

a transmission means for linking said motor to drive a load and presenting a predetermined angular velocity/load torque characteristic to said motor; characterised in that

the number of turns on said windings are approximately equal and the motor comprises a stator bore to stator outer dimension of approximately 0.43.

In an advantageous mode, the motor operates according to a speed torque curve along a first curve $T_1$ for the first direction of rotation to an intersection with a load line $T_3$ and operates according to a torque curve $T_2$ for the second direction of rotation. For all values of speed in a first quadrant, $T_3$ minus $T_2$ is greater than zero. For a second quadrant, where $T_2$ is less than zero, $T_3$ minus $T_2$ is greater than zero for all positive values of $T_3$.

The features of the present invention which are believed to be novel, are set forth with particularity in the appended claims. The invention, together with further objects and advantages, may best be understood by reference to the following description taken in conjunction with the accompanying drawings, in the several Figures in which like reference numerals identify like elements, and in which:

Fig.1 is a perspective view partially cut away depicting an automatic washer utilising the present invention.

Fig.2 is a cross-sectional view of a portion of the Fig.1 automatic washer.

FIG. 3 is a general graph of a torque vs. speed diagram for a permanent split capacitor motor used in the FIG. 1 washing machine.

FIG. 4 is a general block diagram of a control circuit for use with the permanent split capacitor motor.

FIG. 5 is a block diagram of the control circuit and the permanent split capacitor motor.

FIG. 6 is a schematic drawing of the permanent split capacitor motor.

FIG. 7A is a torque/speed curve for a prior art motor.

FIG. 7B is a torque/speed curve for a PSC motor constructed according to the present invention.

FIG. 8A is a graph depicting acceleration in a reversing prior art motor.

FIG. 8B is a graph depicting acceleration in a PSC motor constructed according to the present invention.

FIGS. 9 and 10 are diagrams depicting the dynamics of the FIG. 1 automatic washer.

DESCRIPTION OF THE PREFERRED EMBODIMENTS

The present invention of a novel PSC motor has general applicability and can be used in a variety of applications. One such application is for operating an automatic washer.

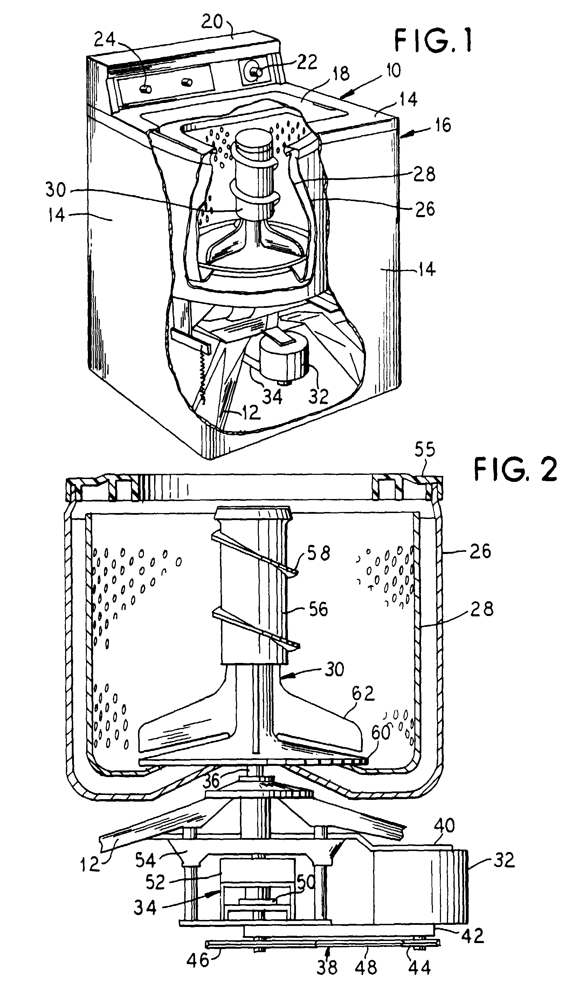

In FIG. 1, reference numeral 10 indicates generally a vertical axis agitator type washing machine having presettable controls for automatically operating the machine through a programmed series of washing, rinsing, and spinning steps. The machine includes a frame 12, carrying panels 14 forming the sides, top, front, and back of a cabinet 16. A hinged lid 18 is provided in the usual manner for access to the interior of the washing machine 10. The washing machine 10 has a rear console 20 in which is disposed manually settable control means, including a timer dial 22 and a temperature selector 24.

Internally of the washing machine 10 there is disposed an imperforate fluid containing tub 26 within which is rotatably mounted a perforate basket 28 for rotation about a vertical axis. A vertically disposed agitator 30 is connected for operation to a motor 32 through a drive mechanism 34.

Referring to FIG. 2, the agitator 30 is linked by a shaft 36 to the reduction drive 34, which in turn is driven through a pulley arrangement 38 by the motor 32. The motor 32 is a high slippage motor and preferably a permanent split-capacitance (PSC) motor which has a low start torque relative to its breakdown torque to provide a soft start of the agitator. The PSC motor 32 also has a relatively flat load curve above the breakdown point so that steady state speed will not vary greatly with load. The motor 32 is mounted in a bracket arrangement 40 and 42 which connects to the frame 12 of the washer 10.

The motor 32 is linked by the pulley arrangement 38, including a drive pulley 44 and a driven pulley 46 connected by a belt 48, to the reduction drive 34. The reduction drive 34, in one embodiment, is a planetary gear drive which includes a spring clutch 50 and a planetary housing 52 mounted in a reduction drive frame 54 that connects to the frame 12 of the washer 10. Although a planetary reduction drive is disclosed herein for use with the present invention, it is also contemplated that a variety of other reduction drive arrangements could be utilized as is known to those skilled in the art. It is also contemplated to eliminate the reduction drive and link the agitator directly to an appropriately selected motor.

The shaft 36 extends upwardly from the reduction drive 34 through the tub 26 and the perforate basket 28 and connects to the agitator 30. A tub ring 55 extends around the top of tub 26. The agitator 30 is a dual action agitator having an upper barrel 56 with helical vanes 58, as well as a lower agitator portion 60 from which extends a plurality of flexible vanes 62. The flexible vanes 62 enable the agitator 30 to absorb energy as the direction of rotation is reversed, while still coupling the agitator 30 to the load provided by water within the tub 26, as well as any articles of clothing therein. This coupling between the agitator and the clothes and water loads the motor to cause the speed to increase slowly. The flexible vanes provide a more uniform load coupling and torque over the angular range of the stroke over a range of clothes load sizes. The flexibility of the vanes 62 also prevents the impact loading at the beginning of the stroke from exceeding the locked rotor torque of the motor 32.

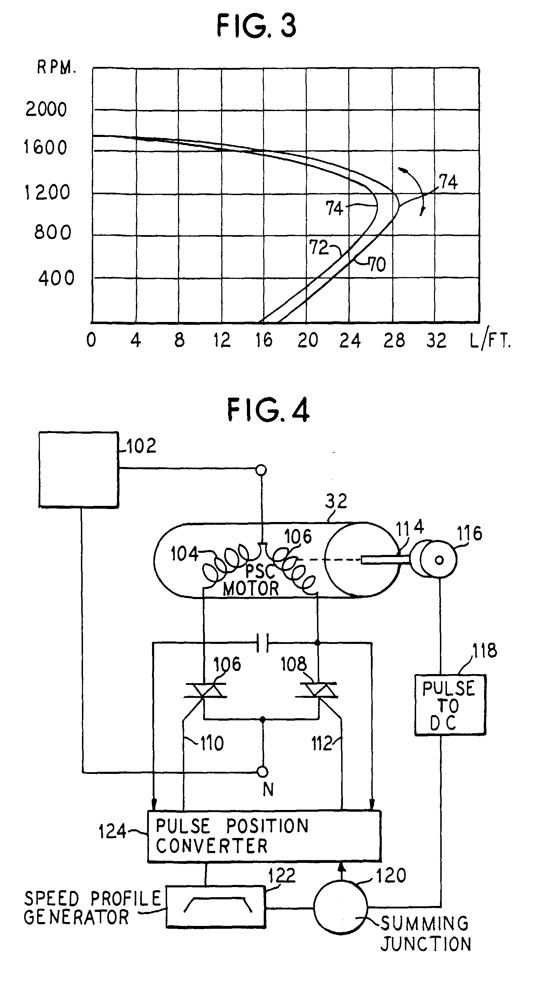

General torque/speed characteristics of the PSC motor 32 are shown in FIG. 3. The torque/speed curve is plotted at 70 for a first direction of operation and the curve 72 shows the torque/speed characteristic in an opposite direction. As discussed above the motor 32 has a low torque at slow speeds, and a relatively flat curve about a breakover or breakdown point 74 as indicated by the rightmost portion of the curve having the highest torque value. It can be seen that the PSC motor 32 is operating primarily on the start-up portion of the torque/speed curve.

Referring now to FIG. 4, in which is illustrated the control circuit of the permanent split capacitor motor 32, the motor 32 is connected to an alternating power source 102 which supplies AC voltage and current at the proper frequency and amplitude for operating the motor 32. The motor 32 includes a pair of windings 104 and 106. These windings 104 and 106 are connected such that one winding is a run winding and the other is an auxiliary winding. A pair of switches 107 and 108 determine which of the windings 104 and 106 are to be the run and auxiliary windings. By way of example, the switches 107 and 108 may be triacs as shown in FIG. 4, the triacs 107 and 108 having control electrodes 110 and 112.

Other types of bidirectional switch means may be used in place of the triacs 107 and 108, as for instance mechanical switches or relays. However, the use of triacs allows relatively precise control at the point at which the windings are energized.

Using the motor and switching arrangement of FIG. 4 a rapid reversal of the motor 32 may be effected by energizing the windings 104 and 106. However, superior performance of an automatic washing machine can be attained by energizing the PSC motor 32 according to a velocity profile, that is, for example, accelerating a motor for a predetermined length of time, running the motor at a constant rate and then finally decelerating the motor until it reaches approximately a zero velocity, at which time the motor 32 is reversed by changing the switches 107 and 108. The velocity profile used to operate the motor in each direction as applied to each of the windings 104 and 106 can take any of a variety of shapes depending upon the application.

As shown in FIG. 4, a shaft 114 of the motor 32 is connected to a tachometer 116 which outputs a signal indicative of the speed of the motor 32. A pulse to dc circuit 118 converts this signal to a dc level which is applied to a summing junction 120. Also supplied to the summing junction 120 is the velocity profile signal from the velocity profile generator 122. The velocity profile generator 122 also supplies a direction signal which is utilized by the pulse position converter 124. The pulse position converter 124 also receives an error signal from the summing junction 120 and then, based on this information, applies a pulse signal to the appropriate triac during a certain phase angle of the ac current supplied from the ac power source 102 to determine the amount of power applied to the motor 32. As is well known, the triac after having been gated on, will remain on until the next zero crossing of the ac current through the motor 32. It is to be understood that other types of control circuits can be used with the novel PSC motor of the present invention, the FIG. 4 circuit being just one example.

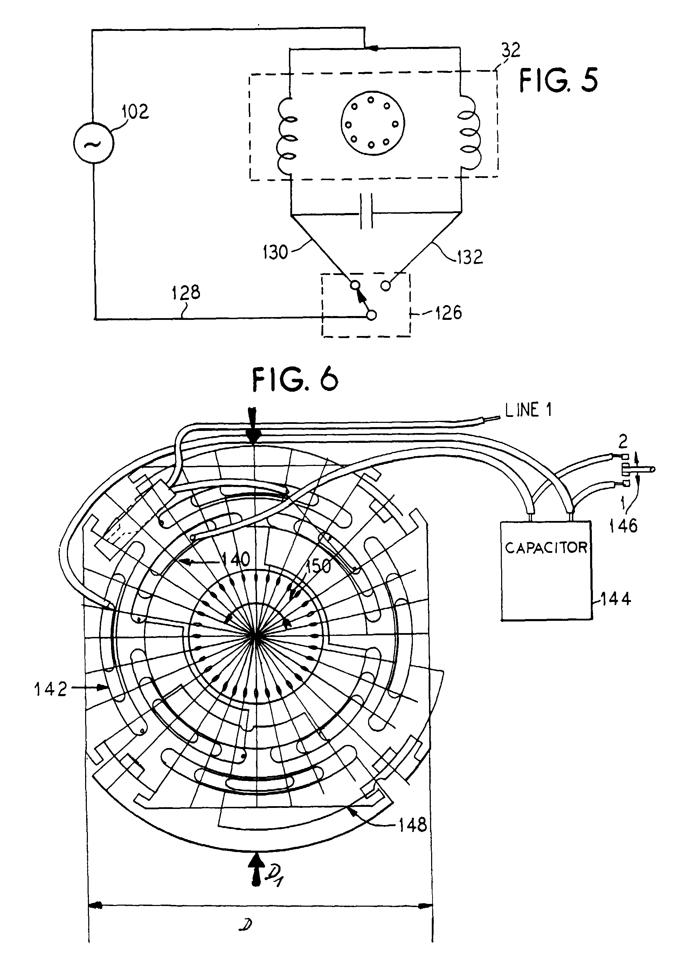

FIG. 5 shows a general block diagram of the present invention. The PSC motor 32 is energized from the ac source 102. The reversing triac drive 126 connects the ac source line 128 to either line 130 or 132 depending upon the direction of rotation selected for the PSC motor 32.

The PSC motor 32 as shown in FIG. 5 has many characteristics which make it ideal for a continuously reversing application, such as for use in driving the agitator of an automatic washer. For example, it does not require a starting switch and has full load efficiency of about 70-80%. The ratio of starting to breakdown torque is about 0.6. Also of importance is the fact that the PSC motor is inherently shorter in axial length than other motor types.

Two requirements are necessary to develop a revolving flux field in a PSC induction motor from standstill position of the PSC motor. The auxiliary winding must be physically displaced by approximately $360°/2P$ where P is the number of poles, from the main winding. For example, in a 4 pole motor it preferably is displaced by 45 degrees from the main winding. Furthermore, the auxiliary winding must have an electrical phase shift of approximately $360°/P$, (for example, preferably 90 degrees for a 4 pole motor) with respect to the main winding. Such a 4 pole PSC motor is shown in FIG. 6 wherein the auxiliary winding 140 is displaced 45 mechanical degrees from the main winding 142 and a capacitor 144 is used to shift the phase voltage in the auxiliary winding 140 when the switch 146 is in position 1 as shown. The cross product of the resulting rotating flux produced by the stator windings of the stator 148 and the induced current in the rotor cage 150 produce motor torque.

As previously stated, the design of prior art PSC motors required that a turns ratio for maximum efficiency at the load point be typically in the range of 1.5 to 2.5 and that the capacitive reactance be chosen to be equal to the main winding open circuit reactance times the turns ratio squared. However, this type of PSC motor can cause certain problems in operating an automatic washer. These established relationships do not suit the requirements of an automatic washer because they result in different speed torque characteristics in each direction of rotation, unbalanced agitator movement, and clothes tangling. For example, torque in the first quadrant of the speed torque curve causes the rotor to continue in the same direction after the reversing switch is activated.

The novel PSC motor according to the present invention overcomes this problem in the prior art by having a turns ratio of approximately 1.0 and a capacitive reactance equal to 1.5 times the main winding open circuit reactance. The capacitor reactance should be in the range 1.25 to 1.75 times the main winding open circuit resistance. In the preferred embodiment, the slot reactance of the PSC motor is taken into account by changing the turns ratio of the motor windings from 1.0 to 1.04.

A typical prior art speed curve is shown in FIG. 7A. It is known in the prior art that a single phase induction motor should have the same general torque characteristics as two polyphase motors of equal rating, mechanically coupled and connected for opposite directions of rotation. This results in the curves of FIG. 7A. When the motor is rotating in one direction, it operates according to a first curve $T_1$ shown at 201. The motor operates according to a second curve $T_2$ shown at 203 when rotating in the opposite direction. In operation, as is well known in the art, the motor accelerates to a steady state speed determined by the interjection of the product load line $T_3$, shown at 205, and the curves $T_1$ and $T_2$. The product load line $T_3$ shown at 205 is one example wherein reversing the motor winding operating at point 207 results in stable but not reversed operation of the motor at point 209.

It has been determined that if the torque value on the product load line $T_3$ minus the torque value on the motor torque curve $T_2$ is greater than zero in the first quadrant (that is, the curves $T_3$ and $T_2$ do not intersect) for all values of speed then successful reversal of the motor will occur. This condition can be satisfied by designing the motor such that for all positive values of $T_3$, $T_2$ is less than zero. That is, the motor is preferably designed such that the reverse motor torque curve $T_2$ is located exclusively in the second quadrant as shown in FIG. 7B.

The novel single phase PSC motor of the present invention, produces the novel speed curves $T_1$ and $T_2$ shown at 211 and 213 respectively, in FIG. 7B. Since the curve $T_2$ at 213 is always in the second quadrant as shown, the PSC motor after reversal from point 215 on the load curve $T_3$, shown at 221, will accelerate to point 217, where it will be in equilibrium. It is important to note that if the ratio of the windings in the PSC motor is 1.0, then the curves 211 and 213 will not be exactly symmetrical. This is because one winding must be wound on top of the other winding in the slots of the motor. Therefore, it has been found that a ratio of the windings of 1.04 provides the proper symmetry of the curves 211 and 213.

Agitator acceleration is an important element in developing the proper wash load rollover and washing action. The motor torque, therefore, must be sufficient to provide the required acceleration of the agitator. It is known in the prior art that to increase output torque a PSC motor size is to be increased in both its diameter and length. However, the PSC motor of the present invention achieves an increase in output torque without using the prior art approach. An analysis of the motor/machine dynamics revealed that over 75% of the motor torque is consumed in accelerating the mass of the rotor. This analysis also shows that when the size of the motor is increased to develop more torque, rotor inertia is sufficiently increased to significantly negate the added torque. As will be explained in detail below, rotor inertia is a function of the diameter to the fourth power, and therefore, it was determined that a radical deviation from the prior art approach of the design ratio of stator bore to outer dimension of the stator was necessary. By reducing the ratio of the bore to the outer dimension from 0.6 to 0.43, (0.6 being the prior art as described above) and adding additional length to maintain the torque, the inertia and torque required to accelerate the rotor was reduced by a factor of 2.8.

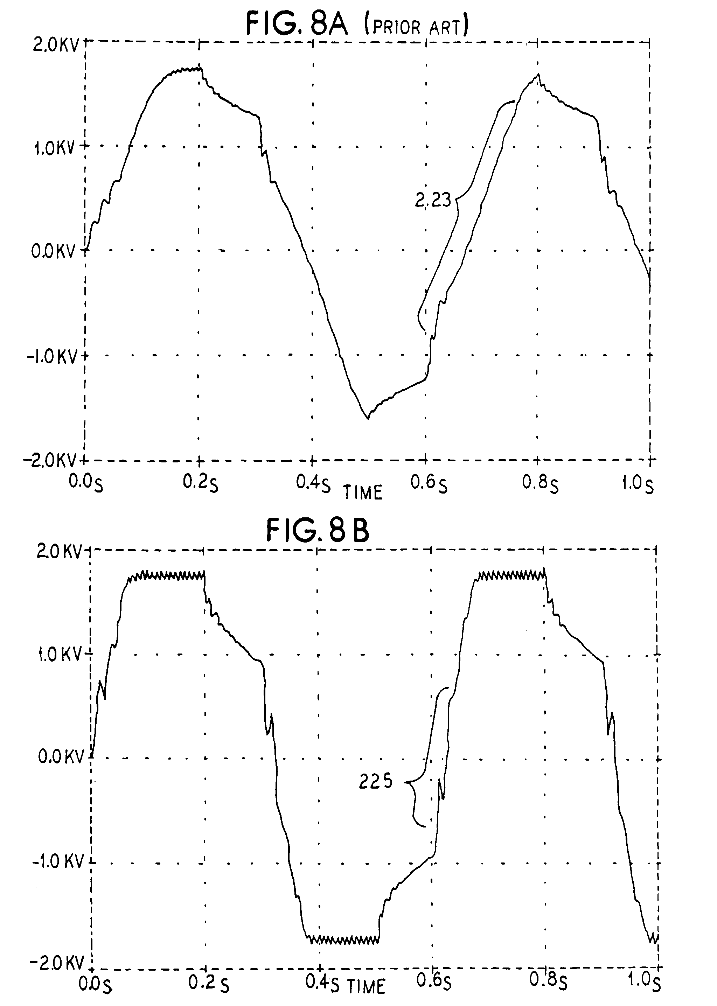

For example, the computer simulation of FIG. 8A of a typical prior art motor having a large diameter shows an acceleration of the motor at 223 being 1570 rad/sec$^2$. As shown in the computer simulation of FIG. 8B the novel PSC motor of the present invention which has a much smaller diameter has an acceleration at 225 of 2736 rad/sec$^2$. Less time necessary for acceleration is an important consideration, since this is an area where induction motors are not efficient.

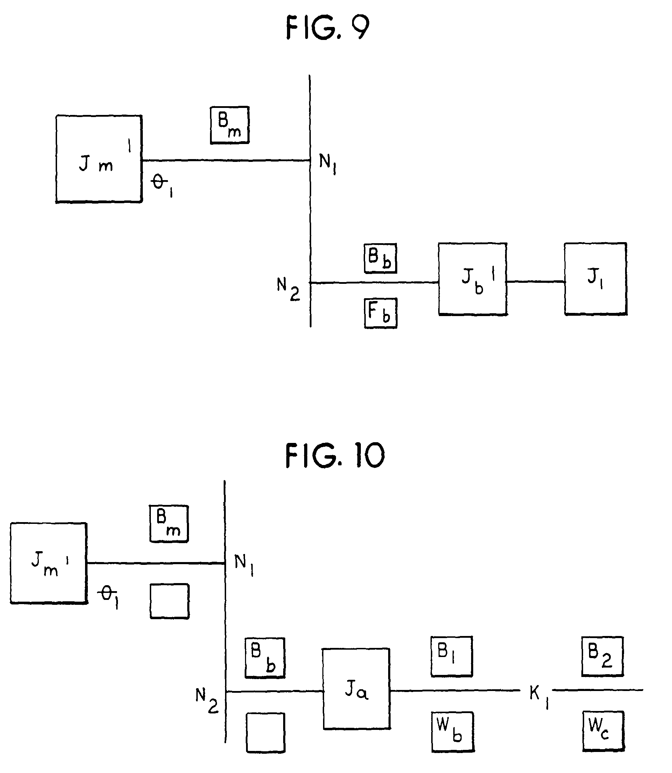

In reference to FIG. 9, the following equations show the relationship of the motor torque for a spin mode of the washer shown in FIGS. 1 and 2 and in reference to FIG. 10 the following shows the agitation mode for the washer shown in FIGS. 1 and 2.

SPIN MODE

$$T(t) = J_m' \frac{d^2\theta_1(t)}{dt^2} + B_m \frac{d\theta_1(t)}{d^t} + \frac{N_1^2}{N_2}(J_b'+J_1)\frac{d^2\theta_1(t)}{dt^2}$$

$$+ \frac{N_1^2}{N_2} B_b \frac{d\theta_1(t)}{dt} + \frac{N_1}{N_2} F_b \frac{d\theta_1(t)}{|d\theta_1|}$$

Where:

$J_m' =$     Total drive inertia $= J_m + J_d$
$J_m =$     Motor inertia $= 45 \times 10^{-3}$ N.m.sec$^2$
$J_d =$     Pulley $= .037 \times 10^{-3}$ N.m.sec$^2$
$B_m =$     Drive friction $= 1.9 \times 10^{-3}$ N.m/RPS
$J_b' =$     Machine inertia $= J_b + J_a + J_s$
$J_b =$     Basket inertia $= .375$ N.m.sec$^2$
$J_a =$     Agitator inertia $= .0088$ N.m.sec$^2$ (includes $9 \times 10^4$ N.m.sec$^2$ Pulley)
$J_s =$     Spin Tube $= .001$ N.m.sec$^2$
$J_1 =$     Inertia of load
      $= .035 \times L$ (dry lbs. of clothing in wet condition)
$N_1/N_2 =$     Gear Ratio $= \frac{1}{2.6}$
$B_b =$     Viscous Friction $= 12.3 \times 10^{-3}$ N.m/RPS
$F_b =$     Coulomb Friction $= 2.26$ N.m

AGITATION MODE

Where:

$J_m' =$     Total drive inertia $= J_m + J_d$
$J_m =$     Motor inertia $= .45 \times 10^{-3}$ N.m.sec$^2$
$J_d =$     Pulley $= .037 \times 10^{-3}$ N.m.sec$^2$
$B_m =$     Drive Friction $= .0019$ N.m./RPS
$J_a =$     Agitator inertia $= .0088$ N.m.sec$^2$ (includes $9 \times 10^{-4}$ N.m.sec$^2$ Pulley)
$N_1/N_2 =$     Gear Ratio $= \frac{1}{11.43}$
$B_b =$     Transmission Viscous Friction $= .0123$ N.m/RPS
$B_1 =$     Load Viscous Friction $= .06$ N.m/RPS
$K_1 =$     Spring Constant $= 2 + .34 \times$ Load(lb.) (N.m/rad)
$B_2 =$     Clothing to Basket Viscous Friction $= 40$ N.m/RPS

The following are specifications for one embodiment of a PSC motor constructed according to the present invention.

A prototype motor has been found to deliver the desired performance characteristics for an automatic washer. The prototype motor delivers this performance at 120 volts, 60 Hz with a 45 mfd capacitor.

To obtain an acceptable agitation velocity profile, the rotor inertia must be related to the motor pull-up torque. A prototype motor has the following inertias:

| | |
|---|---|
| Rotor, shaft and bearing inner race - | $.45 \times 10^{-3}$ N.m.sec$^2$ |
| Fan and Pulley - | $.037 \times 10^{-3}$ N.m.sec$^2$ |
| TOTAL - | $.487 \times 10^{-3}$ N.m.sec$^2$ |

Other ratios may be acceptable.
Prototype design is as follows:

```
Main winding - 33-66 #22

Auxiliary winding - 33-66 #22

Rotor        - 34 slots, 2.4 inches O.D.

Stator       -     -24 slots, 5.5 inches O.D.

Stack        -     1.53 inches

X            -     5.724/6.36

X₀           -     42.55/47.7

R₂           -     9.3

Iron Loss -     31.9/42


Bearings    -     Double Ball
```

Provisions should be made for an internal shaft mounted fan to provide cooling for the windings. A single radial fan located opposite the shaft end in close proximity of the windings will be adequate. Vent holes should be provided in the end bracket to pass axial inlet air and radial exhaust air.

Thus, it can be seen that the novel PSC motor constructed according to the present invention provides the operation according to the speed torque curve shown in FIG. 7 and utilizes a substantially one-to-one ratio for the windings and in addition, utilizes a low inertia rotor having a smaller diameter and longer length than prior art PSC motors. It can be appreciated that the PSC motor of the present invention radically departs from accepted practices of PSC motor design.

As is apparent from the foregoing specification, the invention is susceptible of being embodied with various alterations and modifications which may differ particularly from those that have been described in the preceding specification and description. It should be understood that I wish to embody within the scope of the patent warranted hereon all such modifications as reasonably and properly come within the scope of my contribution to the art.

## Claims

1. A reversing drive apparatus comprising:

   a permanent split capacitor motor (32), having a predetermined number of poles P and run and auxiliary windings which are located approximately 360°/2P mechanical degrees apart, said motor having a capacitor (144) connected in series with the auxiliary winding in a first mode and the run winding in a second mode, to provide an electrical phase shift of 360°/P between the windings, whereby the motor produces a motor torque according to a first angular velocity/torque characteristic (211) in said first mode and a second angular velocity/torque characteristic (213) in said second mode; and
   a transmission means (34, 36, 38) for linking said motor to drive a load and presenting a predetermined angular velocity/load torque characteristic (221) to said motor;

   characterised in that
   the number of turns on said windings are approximately equal and the motor comprises a stator bore (D1) to stator outer dimension (D) ratio of approximately 0.43.

2. A reversing drive apparatus according to claim 1, wherein said first mode is for turning the motor in a first direction and the second mode is for turning said motor in a second direction, such that the motor torque is greater than or equal to the load torque.

EP 0 404 375 B1

3. A reversing drive apparatus according to claim 2, wherein the second angular velocity/torque characteristic in the second direction is substantially the same as the first angular velocity/torque characteristic in the first direction.

4. A reversing drive apparatus according to claim 2 or 3, wherein according to the first angular velocity/torque characteristic, the torque is in the first direction for all values of angular speed of said motor in said second direction.

5. A reversing drive apparatus according to any of the preceding claims further comprising:
a control circuit (107, 108, 110, 112, 116, 118, 120, 122, 124) connected to operate said motor in said first and second modes, the control circuit including means for alternating motor operations between the first and second modes and selectively connecting said capacitor in series with one or the other of the run and auxiliary windings.

6. A reversing drive apparatus according to any one of the preceding claims wherein said drive is adapted for use in an automatic washer (10) having an agitator (30) mounted within a wash tub (26), and with the motor also mounted within the automatic washer, said transmission means being for rotatably driving said agitator.

7. A reversing drive apparatus according to any of the preceding claims, wherein the load torque characteristic has an equilibrium position with said first angular velocity/torque characteristic but has no equilibrium position with said second angular velocity/torque characteristic, in the first direction.

8. A reversing drive apparatus or motor according to any preceding claim, wherein the ratio of turns of said run and auxiliary windings is 1.04.


**Patentansprüche**

1. Umkehrantrieb mit

einem Einphasenmotor mit Anlauf- und Betriebskondensator mit vorbestimmter Polanzahl P sowie einer Lauf- und einer Hilfswicklung, die um etwa 360°/2P mechanische Winkelgrade beabstandet angeordnet sind, wobei ein Kondensator (144) des Motors in einer ersten Betriebsart in Reihe mit der Hilfswicklung und in einer zweiten Betriebsart in Reihe mit der Laufwicklung geschaltet ist, um zwischen den Wicklungen eine elektrische Phasenverschiebung von 360°/P zu erzeugen, so daß der Motor in der ersten Betriebsart ein Motormoment nach einer ersten Winkelgeschwindigkeit-/Moment-Kennlinie (211) und in einer zweiten Betriebsart ein Motormoment nach einer zweiten Winkelgeschwindigkeit/Moment-Kennlinie (213) erzeugt, sowie mit
einem Getriebe (34, 36, 38), das den Motor antrieblich mit einer Last verbindet und den Motor mit einer vorbestimmten Winkelgeschwindigkeit-/Moment-Kennlinie (221) beaufschlagt,

**dadurch gekennzeichnet,** daß
die Anzahl der Windungen der Wicklungen etwa gleich ist und der Motor ein Verhältnis der Stator-Innen-(D1) zur Stator-Außenabmessung (D) von etwa 0,43 aufweist.

2. Umkehrantrieb nach Anspruch 1, bei dem in der ersten Betriebsart der Motor in einer ersten Richtung und in der zweiten Betriebart in einer zweiten Richtung dreht, wobei das Motordrehmoment gleich oder größer ist als das Lastmoment.

3. Umkehrantrieb nach Anspruch 2, bei dem die zweite Winkelgeschwindigkeit/Moment-Kennlinie in der zweiten Richtung im wesentlichen gleich der ersten Winkelgeschwindigkeit/ Moment-Kennlinie in der ersten Richtung ist.

4. Umkehrantrieb nach Anspruch 2 oder 3, bei dem für alle Werte der Winkelgeschwindigkeit in der zweiten Richtung das Drehmoment entsprechend der ersten Winkelgeschwindigkeit/ Moment-Kennlinie in der ersten Richtung verläuft.

5. Umkehrantrieb nach einem der vorgehenden Ansprüche weiterhin mit einer
Steuerschaltung (107, 108, 110, 112, 116, 118, 120, 122, 124), die mit dem Motor verschaltet ist, um ihn in der ersten und der zweiten Betriebsart zu betreiben, und die Einrichtungen aufweist, um den Motor zwischen der ersten und der zweiten Betriebsart hin- und herzuschalten und den Kondensator mit der Lauf- oder der Hilfswicklung wahlweise in Reihe zu schalten.

EP 0 404 375 B1

**6.** Umkehrantrieb nach einem der vorgehenden Ansprüche, der für einen Waschautomaten (10) mit einem in einem Laugenkübel (26) gelagerten Rührteller (30) geeignet ist, wobei der Motor ebenfalls in dem Waschautomaten angeordnet und das Getriebe zum Drehantrieb des Rohrers dient.

**7.** Umkehrantrieb nach einem der vorgehenden Ansprüche, bei dem die Lastkennlinie in der ersten Richtung einen Gleichgewichtspunkt mit der ersten, aber keinen solchen mit der zweiten Winkelgeschwindigkeit/Moment-Kennlinie aufweist.

**8.** Umkehrantrieb oder -motor nach einem der vorgehenden Ansprüche, bei dem das Windungszahlverhältnis zwischen der Lauf- und der Hilfswicklung gleich 1,04 ist.


**Revendications**

**1.** Appareil à entraînement réversible comprenant :

un moteur (32) à condensateur permanent de division, comportant un nombre P prédéterminé de pôles et des enroulements de marche et auxiliaire qui sont positionnés, écartés d'environ 360°/2P degrés mécaniques, ledit moteur comportant un condensateur (144) connecté en série avec l'enroulement auxiliaire, dans un premier mode, et avec l'enroulement de marche dans un second mode, pour fournir un déphasage électrique de 360°/P entre les enroulements, ce par quoi le moteur produit un couple de moteur selon une première caractéristique (211) de vitesse angulaire/couple dans ledit premier mode, et une seconde caractéristique (213) de vitesse angulaire/couple dans ledit second mode ; et
un moyen (34, 36, 38) de transmission destiné à établir une liaison avec ledit moteur pour entraîner une charge, et présentant une caractéristique prédéterminée (221) de vitesse angulaire/couple de charge pour ledit moteur ;

caractérisé en ce que
le nombre de tours desdits enroulements est approximativement égal, et en ce que le moteur comprend un rapport d'alésage de stator (D1) à la dimension extérieure (D) de stator d'environ 0,43.

**2.** Appareil à entraînement réversible selon la revendication 1, dans lequel ledit premier mode est destiné à faire tourner le moteur dans un premier sens, et dans lequel le second mode est destiné à faire tourner ledit moteur dans un second sens, de façon telle que le couple de moteur soit supérieur ou égal au couple de charge.

**3.** Appareil à entraînement réversible selon la revendication 2, dans lequel la seconde caractéristique de vitesse angulaire/couple, dans le second sens, est sensiblement la même que la première caractéristique de vitesse angulaire/couple dans le premier sens.

**4.** Appareil à entraînement réversible selon la revendication 2 ou 3, dans lequel selon la première caractéristique de vitesse angulaire/couple, le couple est dans le premier sens pour toutes valeurs de vitesse angulaire dudit moteur dans ledit second sens.

**5.** Appareil à entraînement réversible selon l'une quelconque des revendications précédentes, comprenant en outre :
un circuit de commande (107, 108, 110, 112, 116, 118, 120, 122, 124) connecté pour mettre en oeuvre ledit moteur dans lesdits premier et second modes, le circuit de commande comprenant un moyen pour alterner le fonctionnement du moteur entre lesdits premier et second modes, et connecter ledit condensateur en série, de manière sélective, avec l'un ou l'autre, des enroulements de marche et auxiliaire.

**6.** Appareil à entraînement réversible selon l'une quelconque des revendications précédentes, dans lequel ledit entraînement est conçu pour une utilisation dans une machine à laver automatique (10) comportant un agitateur (30) monté dans une cuve (26) de lavage et, dans lequel le moteur est également monté dans la machine à laver automatique, ledit moyen de transmission étant destiné à entraîner en rotation ledit agitateur.

**7.** Appareil à entraînement réversible selon l'une quelconque des revendications précédentes, dans lequel, dans le premier sens, la caractéristique de charge/couple a une position d'équilibre avec ladite première caractéristique de vitesse angulaire/couple, mais n'a pas de position d'équilibre avec ladite seconde caractéristique de vitesse angulaire/couple.

8. Appareil ou moteur à entraînement réversible selon l'une quelconque des revendications précédentes, dans lequel le rapport de tours desdits enroulements de marche et auxiliaire est de 1,04.

FIG.1

FIG. 2

# FIG. 3

# FIG. 4

FIG. 5

FIG. 6

LINE 1

CAPACITOR

FIG. 7A
(PRIOR ART)

FIG. 7B

## FIG. 8A (PRIOR ART)

## FIG. 8 B

FIG. 9

FIG. 10